(19) Europäisches Patentamt
European Patent Office
Office européen des brevets

(11) **EP 1 692 411 B1**

(12) **EUROPÄISCHE PATENTSCHRIFT**

(45) Veröffentlichungstag und Bekanntmachung des Hinweises auf die Patenterteilung:
**16.07.2008   Patentblatt 2008/29**

(21) Anmeldenummer: **03789267.6**

(22) Anmeldetag: **13.12.2003**

(51) Int Cl.:
**F16D 48/06** (2006.01)

(86) Internationale Anmeldenummer:
**PCT/EP2003/014198**

(87) Internationale Veröffentlichungsnummer:
**WO 2005/057039 (23.06.2005 Gazette 2005/25)**

(54) **VERFAHREN ZUR TEMPERATURABHÄNGIGEN REGELUNG EINER LAMELLENKUPPLUNG**

METHOD FOR  TEMPERATURE-DEPENDANT CONTROL OF A MULTIPLE DISC CLUTCH

PROCEDE POUR REGULER UN EMBRAYAGE A DISQUES EN FONCTION DE LA TEMPERATURE

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**23.08.2006   Patentblatt 2006/34**

(73) Patentinhaber: **GKN Driveline International GmbH 53797 Lohmar (DE)**

(72) Erfinder:
• **PFEIFER, Ralf**
**51429 Bensberg (DE)**

• **GASSMANN, Theodor**
**53721 Siegburg (DE)**

(74) Vertreter: **Oberwalleney, Stephan et al**
**Neumann Müller Oberwalleney & Partner**
**Patentanwälte**
**Overstolzenstrasse 2a**
**50677 Köln (DE)**

(56) Entgegenhaltungen:
**DE-A- 19 815 259          US-A- 5 337 866**
**US-A- 5 499 954**

**Beschreibung**

Die Erfindung betrifft ein Verfahren zur temperaturabhängigen Regelung einer Lamellenkupplung über der Zeit, wobei die Lamellenkupplung zum Einsatz im Antriebsstrang eines Kraftfahrzeugs dient und in einem Gehäuse in Öl laufende Kupplungslamellen aufweist. Durch entsprechende Betätigung der Lamellenkupplung werden Drehmomente auf die Achsen des Kraftfahrzeugs bzw. die Räder einer Achse des Kraftfahrzeugs übertragen.

Bei der regelmäßigen und intensiven Nutzung einer Lamellenkupplung entsteht Wärme, die zu einer Überhitzung der Kupplungslamellen und damit zu einem Funktionsverlust führen kann. Aus der US 2003/0079954A1 ist bereits ein Verfahren und eine Vorrichtung zum Regeln einer elektromagnetischen Lamellenkupplung bekannt, um ein Überhitzen der Kupplungslamellen zu vermeiden. Durch die Vorrichtung und das Verfahren wird ein Stellwert zum Schalten der Lamellenkupplung entsprechend einem bestimmten Fahrzustand des Kraftfahrzeugs bestimmt. Dabei kann je nach in der Lamellenkupplung erzeugter exothermer Energie aus einer Reihe von verschiedenen Programmen zur Steuerung des Fahrzustands ausgewählt werden.

Der nächstliegende Stand der Technik ist bekannt aus Dokument DE 19815259.

Der vorliegenden Erfindung liegt die Aufgabe zugrunde, ein Verfahren zum Regeln einer Lamellenkupplung vorzuschlagen, das einen wirksamen Schutz vor Überhitzung und somit eine lange Lebensdauer der Lamellenkupplung gewährleistet und gleichzeitig eine zuverlässige Funktion mit minimalen Betriebsunterbrechungen bietet.

Diese Aufgabe wird erfindungsgemäß durch ein Verfahren zum temperaturabhängigen Regeln einer Lamellenkupplung im Antriebsstrang eines Kraftfahrzeugs mit einem Eingangsbauteil, einem Ausgangsbauteil und Kupplungslamellen zur Drehmomentübertragung gelöst, wobei in der Lamellenkupplung bei einer Drehzahldifferenz zwischen dem Eingangsbauteil und dem Ausgangsbauteil eine Reibleistung $P_i$ entsteht, die ein Erwärmen der Kupplungslamellen zur Folge hat, mit folgenden Verfahrensschritten:

Bestimmen einer kupplungsbezogenen Temperatur,

bei Betrieb der Kupplungslamellen in einem Temperaturbereich unterhalb einer definierten, dauernd zulässigen ersten Temperatur $T_1$ wird die Lamellenkupplung abhängig vom Traktionsbedarf ungeachtet der entstehenden Reibleistung geregelt,

bei Betrieb der Kupplungslamellen in einem Temperaturbereich zwischen der ersten Temperatur $T_1$ und einer gesetzten höheren zweiten Temperatur $T_2$ wird die Lamellenkupplung bedarfsabhängig derart geregelt, daß die eingebrachte Reibleistung herabgesetzt wird,

bei Betrieb der Kupplungslamellen oberhalb der ersten Temperatur $T_1$ wird die gesetzte zweite Temperatur $T_2$ niedriger gesetzt,

bei Erreichen der zweiten Temperatur $T_2$ wird die Lamellenkupplung derart geregelt, daß die kupplungsbezogene Temperatur sinkt.

Ein derartiges Verfahren zum temperaturabhängigen Regeln einer Lamellenkupplung bietet den Vorteil, daß die Lamellenkupplung wirksam vor Überhitzung geschützt ist und somit eine verlängerte Lebensdauer aufweist. Durch die bedarfsabhängige Regelung der Lamellenkupplung im Temperaturbereich zwischen der ersten Temperatur $T_1$ und der zweiten Temperatur $T_2$ derart, daß die eingebrachte Reibleistung herabgesetzt wird, werden Betriebsunterbrechungen vermieden. Außerdem bewirkt ein Herabsetzen der zweiten Temperatur $T_2$ nachdem die kupplungsbezogene Temperatur die erste Temperatur $T_1$ überschritten hat, daß die der Lamellenkupplung zugeführte Reibleistung im Extremfall rechtzeitig zu Null gesetzt wird, um ein Überhitzen zu vermeiden. Dabei kann die gesetzte zweite Temperatur $T_2$ unmittelbar mit Überschreiten der ersten Temperatur $T_1$ herabgesetzt werden. Es ist aber auch ein zeitverzögertes Herabsetzen denkbar. Nach einer bevorzugten Weiterbildung ist vorgesehen, daß die zweite Temperatur $T_2$ in Abhängigkeit von der Betriebsdauer der Lamellenkupplung oberhalb der Temperatur $T_1$ in Stufen herabgesetzt wird. Alternativ oder in Ergänzung hierzu kann die zweite Temperatur $T_2$ auch in Abhängigkeit von der Steigung der kupplungsbezogenen Temperatur bei Betrieb oberhalb der ersten Temperatur $T_1$ herabgesetzt. Das heißt bei schnellem Temperaturanstieg der kupplungsbezogenen Temperatur würde auch die zweite Temperatur $T_2$ entsprechend schnell reduziert, während sie bei langsamen Anstieg der kupplungsbezogenen Temperatur entsprechend langsamer reduziert werden würde.

Die Reibleistung $P_i$, die bei Drehzahldifferenz zwischen Eingangsbauteil und Ausgangsbauteil in der Lamellenkupplung entsteht, wird vorzugsweise aus der Drehzahldifferenz zwischen dem Eingangsbauteil und dem Ausgangsbauteil sowie einem in der Lamellenkupplung erzeugten Sperrmoment berechnet. Dabei kann zum Herabsetzen der Reibleistung in der Lamellenkupplung nach Überschreiten der Temperatur $T_1$ das Sperrmoment oder die Drehzahldifferenz reduziert werden.

Es ist vorgesehen, daß die Lamellenkupplung mittels einer elektronischen Regeleinheit zur Regelung der Fahrdynamik des Kraftfahrzeugs gesteuert wird, wobei die Reibleistung $P_i$ in Abhängigkeit vom Fahrzustand des Kraftfahrzeugs nach Traktionsbedarf geregelt wird. Dabei soll in kritischen Fahrzuständen die Regelung der Fahrdynamik gegenüber einer Verminderung der Reibleistung der Lamellenkupplung Vorrang haben, um gegebenenfalls einen Unfall des Kraftfahrzeugs zu vermeiden. In diesem Ausnahmefall, beispielsweise bei Eingreifen eines elektronischen Stabilitätsprogramms (ESP) in die Fahrdynamik, wird ein Überschreiten der zweiten Temperatur $T_2$ zugelassen.

Es ist in bevorzugter Ausgestaltung vorgesehen, daß die zweite Temperatur $T_2$ nach Ablauf einer bestimmten Zeit $\Delta t_2$, nachdem die kupplungsbezogene Temperatur die erste Temperatur $T_1$ unterschritten hat, wieder auf ihren Ausgangswert zurückgesetzt wird. Alternativ hierzu kann die zweite Temperatur $T_2$ auch wieder auf ihren Ausgangswert zurückgesetzt werden, nachdem die kupplungsbezogene Temperatur eine definierte dritte Temperatur $T_3$ unterschritten hat. Diese liegt vorzugsweise unterhalb der ersten Temperatur $T_1$, sie kann aber auch gleich $T_1$ sein oder darüber liegen. Es ist vorgesehen, daß die kupplungsbezogene Temperatur nach erneutem Zurücksetzen der zweiten Temperatur $T_2$ auf ihren Ausgangswert wieder abhängig vom Traktionsbedarf ungeachtet der entstehenden Reibleistung geregelt wird.

Als kupplungsbezogene Temperatur wird vorzugsweise eine Lamellentemperatur $T_{Lam}$ bestimmt. Dies erfolgt näherungsweise mit Hilfe eines vereinfachten Wärmemodells. Dabei werden zur näherungsweisen Bestimmung eine Referenztemperatur $T_{Ref}$ eines mit den Kupplungslamellen zumindest mittelbar im Wärmeaustausch stehenden Mediums oder Bauteils und die der Lamellenkupplung zugeführte Reibleistung verwendet. Vorzugsweise wird als Referenztemperatur die Öltemperatur des in der Lamellenkupplung zur Schmierung und Kühlung vorhandenen Öls verwendet, da die Öltemperatur mit der Lamellentemperatur über Leistungs-, Wärmespeicher- und Wärmeübergangswerte verknüpft ist. Alternativ hierzu könnte auch die Gehäusetemperatur der Lamellenkupplung als Referenztemperatur verwendet werden, wobei sie aufgrund weiterer Randbedingungen etwas schlechtere Ergebnisse bei der Ermittlung der Lamellentemperatur liefern würde. In grober Näherung kann aber auch die atmosphärische Umgebungstemperatur am Kupplungsgehäuse als Referenztemperatur gemessen werden. Die Lamellenkupplung gibt Wärme an die Umgebung ab, so daß die Umgebungstemperatur, wenn auch ein etwas ungenauer, Gradmesser für die Wärmeabfuhr ist. die Verwendung des vereinfachten Wärmemodells bietet den Vorteil, daß somit eine zuverlässige Größe für die Lamellentemperatur zur Verfügung steht, deren Messung, insbesondere bei nicht raumfest gestalteten Kupplungslamellen, an der Oberfläche nur schwer oder gar nicht möglich ist.

Ein bevorzugtes Ausführungsbeispiel der Erfindung geht aus der Zeichnung hervor. Hierin zeigt

Figur 1    beispielhaft einen Temperaturverlauf bei Betrieb einer Lamellenkupplung mit dem erfindungsgemäßen Verfahren;

Figur 2    das erfindungsgemäße Verfahren zum temperaturabhängigen Regeln einer Lamellenkupplung als Ablaufdiagramm;

Figur 3    ein Leistungsdiagramm mit Darstellung des Sperrmoments über der Winkelgeschwindigkeit;

Figur 4    ein Verfahren zum näherungsweisen Bestimmen der Betriebstemperatur einer Lamellenkupplung als Ablaufdiagramm.

Um bei dauernder Kupplungsbetätigung ein Überhitzen der Lamellenkupplung zu vermeiden, ist eine dynamischen Temperaturanpassung vorgesehen, mit der eine begrenzte und kontrollierte Überlastung der Kupplungslamellen zugelassen wird. Hierfür sind eine niedrigere erste Temperatur $T_1$, bis zu der die Lamellenkupplung dauerfest ist, und eine höhere zweite Temperatur $T_2$ definiert, oberhalb derer die Lamellenkupplung durch Überhitzen sofort zerstört werden könnte. Dabei sind die Kupplungslamellen im Temperaturbereich zwischen den Temperaturen $T_1$ und $T_2$ zeitfest. Es ist vorgesehen, daß in dem Temperaturbereich unterhalb der ersten Temperatur $T_1$ ($T_{Lam} < T_1$) das Kupplungsmoment entsprechend dem Leistungsbedarf der Lamellenkupplung geregelt wird. In dem Zeitfestigkeitstemperaturbereich ($T_1 < T_{Lam} < T_2$) wird die Kupplungsleistung temperaturabhängig reduziert, wobei die Temperatur $T_2$ grundsätzlich nicht überschritten werden sollte. Dabei wird die Lamellenkupplung ab Überschreiten der ersten Temperatur $T_1$ so geregelt, daß die Reibleistung abnimmt und der Temperaturanstieg verlangsamt wird. Außerdem wird die zweite Temperatur $T_2$ mit wachsender Dauer des Kupplungsvorgangs bei Betrieb oberhalb der ersten Temperatur $T_1$ kontinuierlich gesenkt, so daß die Lamellentemperatur mit zunehmender Zeit wieder an die erste Temperatur $T_1$ herangeführt wird. Bei Erreichen der zweiten Temperatur $T_2$ wird die Lamellenkupplung derart geregelt, daß die Lamellentemperatur $T_{Lam}$ sinkt. Nach einer weiteren Maßnahme ist vorgesehen, daß die erste Temperatur $T_1$ und die zweite Temperatur $T_2$ unter Berücksichtigung von vorangegangenen Überhitzungen regelmäßig neu berechnet und entsprechend korrigiert werden. Dabei werden die vormaligen Überhitzungen, d.h. Betrieb der Lamellenkupplung im zeitfesten Temperaturbereich, als Maß für bereits bestehende Vorschädigungen angenommen. Durch die genannten Maßnahmen wird insgesamt ein Dauerschaden der Lamellenkupplung durch Überhitzung vermieden.

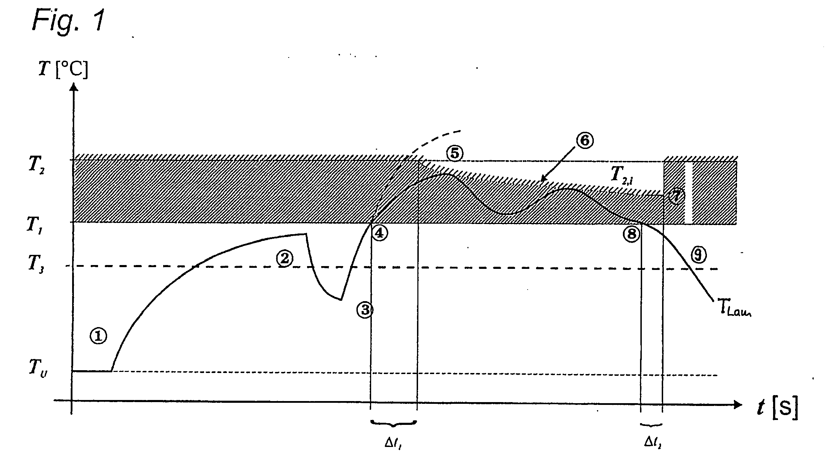

Aus Figur 1 geht beispielhaft der Temperaturverlauf in einer Lamellenkupplung, die nach dem erfindungsgemäßen Verfahren geregelt wird, hervor. Es ist ersichtlich, daß nach einer Aufheizphase der Lamellenkupplung von Punkt 1 nach Punkt 2, einer sich daran anschließenden vorübergehenden Abkühlung von Punkt 2 nach Punkt 3 und einer erneuten Aufheizung ab Punkt 3, die untere erste Temperatur $T_1$ beim Punkt 4 überschritten wird. Dabei wird die Kupplung bis zu diesem Punkt entsprechend dem für den jeweiligen Fahrzustand erforderlichen Bedarf geregelt. Ohne weitergehenden Regeleingriff in die Lamellenkupplung und bei hoher Reibleistung würde sich diese weiter erhitzen, wie aus der gestrichelten Linie von Punkt 4 nach Punkt 5 hervorgeht, und beim Überschreiten der zweiten Temperatur $T_2$ zerstört

werden.

Dies wird jedoch durch den temperaturabhängigen Regeleingriff, welcher ab Überschreiten der ersten Temperatur $T_1$ erfolgt, verhindert, wobei die in die Lamellenkupplung eingebrachte Reibleistung herabgesetzt wird. Das heißt, daß die der Lamellenkupplung zugeführte Leistung kleiner sein soll als die abgeführte Leistung. Auf diese Weise wird ein weiteres Ansteigen der Lamellentemperatur $T_{Lam}$ zugelassen, wobei der Temperaturanstieg jedoch vermindert ist. Es ist vorgesehen, daß der Regeleingriff derart erfolgt, daß die tatsächliche bzw. näherungsweise berechnete Lamellentemperatur $T_{Lam}$ wieder auf die erste Temperatur $T_1$ oder darunter zurückgeführt wird. Dabei kann die der Lamellenkupplung zugeführte Reibleistung auf zweierlei Weise reduziert werden, nämlich durch Lüften oder durch Schließen der Lamellenkupplung. Die entsprechende Regelung erfolgt in Abhängigkeit vom Traktionsbedarf des Kraftfahrzeugs.

Es ist weiterhin vorgesehen, daß nach Überschreiten der ersten Temperatur $T_1$ die zweite Temperatur $T_{2,i}$ kontinuierlich abgesenkt wird, was bei Ziffer 6 dargestellt ist. Dabei wird die zweite Temperatur $T_{2,i}$ im vorliegenden Beispiel mit zeitlicher Verzögerung $\Delta t_1$, nachdem die Lamellentemperatur die erste Temperatur $T_1$ überschritten hat, reduziert. Bei Erreichen der zweiten Temperatur $T_{2,i}$ wird die Lamellenkupplung derart geregelt, daß die Lamellentemperatur $T_{Lam}$ sinkt. Dabei kann die Lamellenkupplung, nachdem die Lamellentemperatur $T_{Lam}$ ein Stückweit abgesunken ist, weiterhin im zeitfesten Temperaturbereich derart betrieben werden, daß die eingebrachte Reibleistung herabgesetzt wird. Durch das Herabsetzen der zweiten Temperatur $T_{2,I}$ erfolgt ein Lüften bzw. Schließen der Lamellenkupplung, wodurch die Lamellentemperatur $T_{Lam}$ sinkt, bereits früher als dies bei statischer Temperatur $T_2$ der Fall wäre. Ein Versagen der Lamellenkupplung aufgrund von Überhitzung wird verhindert.

Einen vordefinierten Zeitraum $\Delta t_2$ nachdem die Lamellentemperatur $T_{Lam}$ bei Punkt 8 die erste Temperatur $T_1$ erneut unterschritten hat, wird die zweite Temperatur $T_{2,i}$ wieder auf ihren Ausgangswert $T_{2,0}$ zurückgesetzt. Dies ist bei Ziffer 7 dargestellt. Alternativ hierzu - was hier nicht näher dargestellt ist - kann die zweite Temperatur $T_{2,i}$ wieder auf ihren Ausgangswert $T_{2,0}$ zurückgesetzt werden, wenn die Lamellentemperatur $T_{Lam}$ eine definierte, im dauerfesten Temperaturbereich liegende, dritte Temperatur $T_3$ erreicht oder unterschreitet. Dies ist bei Punkt 9 dargestellt.

Insgesamt wird durch die genannten Maßnahmen die Kupplungstemperatur reduziert, so daß Überhitzungsschäden nur im konstruktiv festgelegten Bereich auftreten können. Bei Prioritätskonflikten zwischen der Regelung der Fahrdynamik des Kraftfahrzeugs und der Regelung der Lamellentemperatur ist vorgesehen, daß die Fahrdynamikregelung Vorrang hat, damit ein Unfall des Kraftfahrzeugs vermieden wird.

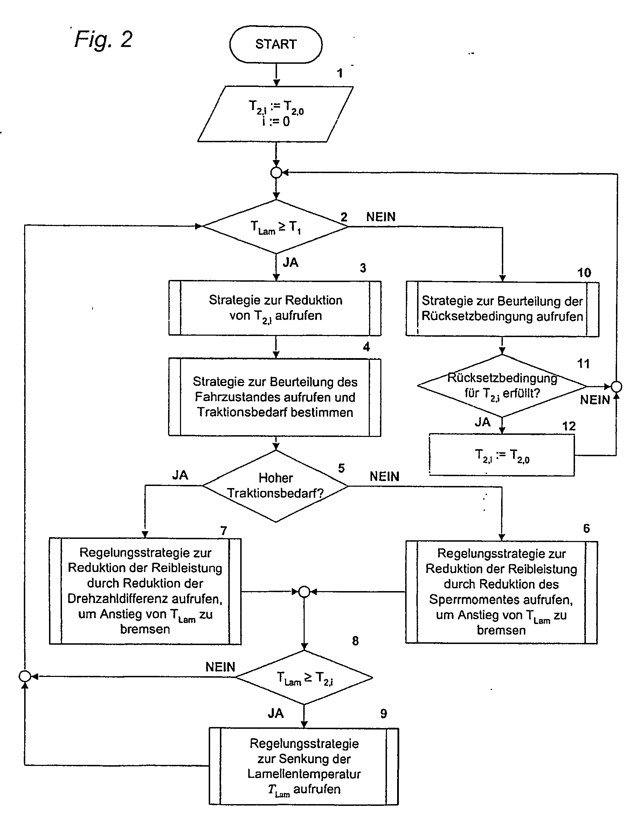

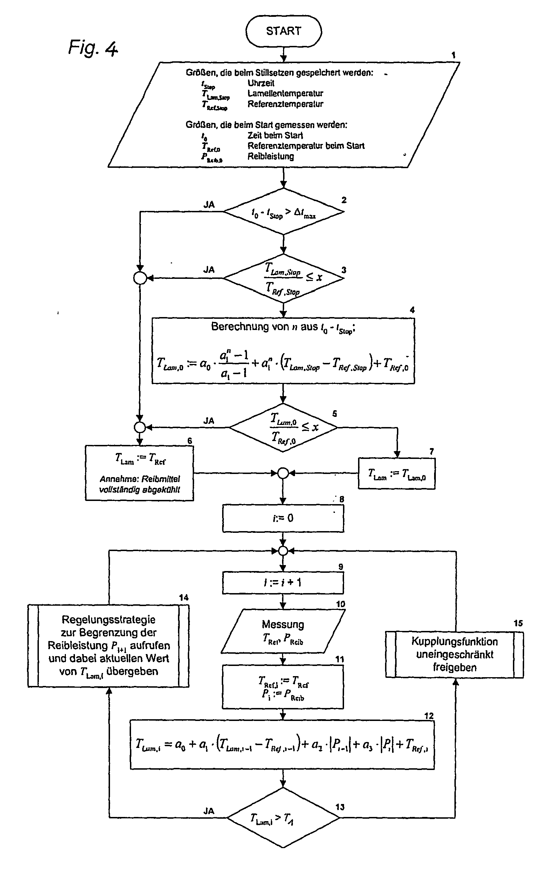

Figur 2 zeigt das Verfahren zum temperaturabhängigen Regeln der Lamellenkupplung als Ablaufdiagramm. Nach Festsetzen der ersten Temperatur $T_{2,0}$ zum Zeitpunkt t=0 im **Verfahrensschritt 1** wird die Lamellentemperatur $T_{Lam}$ mit der vorgegebenen ersten Temperatur $T_1$ in bestimmten Zeitintervallen, welche in ihrer Länge variieren können, verglichen. Dies ist als Verfahrensschritt 2 dargestellt. Dabei wird die Lamellentemperatur $T_{Lam}$ näherungsweise mit Hilfe eines Wärmemodells berechnet, was hier nicht dargestellt ist, sondern in der Beschreibung zu Figur 4 genauer erläutert wird. Ergibt der Temperaturvergleich, daß die Lamellentemperatur $T_{Lam}$ die erste Temperatur $T_1$ nicht überschritten hat, d.h. daß die Lamellenkupplung im dauerfesten Temperaturbereich betrieben wird, kann die Lamellenkupplung nach Bedarf in Abhängigkeit vom Fahrzustand des Kraftfahrzeuges geregelt werden. Übersteigt die berechnete Lamellentemperatur $T_{Lam}$ jedoch die definierte erste Temperatur $T_1$, d.h. die Lamellenkupplung wird im zeitfesten Temperaturbereich betrieben, so besteht die Gefahr einer Überhitzung und dauerhafter Schädigung der Kupplungslamellen. Ist dies der Fall, so wird die Regelstrategie zum Regeln der Lamellenkupplung umgestellt, wobei die Lamellenkupplung weiterhin bedarfsabhängig geregelt wird, jedoch nunmehr dergestalt, daß die eingebrachte Reibleistung minimiert wird. Eine Steigerung der Lamellentemperatur $T_{Lam}$ wird zugelassen, wobei jedoch der Temperaturanstieg, d. h. die Ableitung der Temperatur nach der Zeit (dT/dt) vermindert ist.

Um eine dauerhafte Schädigung der Lamellenkupplung durch Überhitzen zu verhindern, wird in **Verfahrensschritt 3** eine Regelstrategie zur Reduktion der zweiten Temperatur $T_2$ aufgerufen, so daß die Temperatur $T_2$ entsprechend dem hinterlegten Algorithmus abgesenkt wird. Dabei wird die zweite Temperatur $T_{2,i}$ zu jeweils aufeinanderfolgenden Zeitpunkten kontinuierlich, gesenkt. Dabei errechnet sich die reduzierte zweite Temperatur $T_{2,i}$ für Folgezeitpunkte $t_2 = t_1 + t$ in Abhängigkeit von der Dauer, in der die Lamellenkupplung oberhalb von der ersten Temperatur $T_1$ betrieben wird gemäß der Formel:

$$T_{2,i} = T_{2,i-1} - k \cdot t_i .$$

Außerdem wird zeitgleich hierzu die Regelstrategie zur Beurteilung des Fahrzustands des Kraftfahrzeugs aufgerufen und es wird in bestimmten Zeitintervallen der Traktionsbedarf der Räder berechnet, **Verfahrensschritt 4.** Als Eingangsgröße zur Ermittlung des Traktionsbedarfs dienen der Fahrzustand des Kraftfahrzeuges, welcher wiederum von diversen Faktoren, wie beispielsweise eingelegter Getriebegang, befahrenem Gelände oder Fahrzeuggeschwindigkeit abhängt. Die Ermittlung des Traktionsbedarfs ist als **Verfahrensschritt 5** dargestellt.

Die in der Lamellenkupplung entstehende Reibleistung, welche die eingebrachte Wärme maßgeblich beeinflußt, berechnet sich aus der Drehzahldifferenz zwischen dem Eingangsbauteil und dem Ausgangsbauteil der Lamellenkupplung sowie dem aufgebrachten Sperrmoment. Dabei kann die Drehzahldifferenz aus den unterschiedlichen Drehzahlen der Räder bzw. der unterschiedlichen Drehzahlen der Achsen des Kraftfahrzeugs ermittelt werden, deren Werte bei heutigen Kraftfahrzeugen durch ein Antiblockiersystem bzw. eine elektronische Fahrdynamikregelung zur Verfügung gestellt werden können. Ist keine hohe Traktion erforderlich, wird in **Verfahrensschritt 6** eine Regelstrategie zur Reduktion der Reibleistung durch Reduktion des Sperrmoments aufgerufen, um den Anstieg der Lamellentemperatur $T_{Lam}$ zu bremsen. Durch Öffnen der Lamellenkupplung wird das Sperrmoment reduziert, so daß die eingebrachte Reibleistung abnimmt. Besteht jedoch ein hoher Traktionsbedarf, so wird eine Regelstrategie zur Reduktion der Reibleistung durch Reduktion der Drehzahldifferenz aufgerufen, um den Anstieg der Lamellentemperatur $T_{Lam}$ zu bremsen.

Dies ist als **Verfahrensschritt 7** dargestellt. Durch Schließen der Lamellenkupplung wird die Differenzdrehzahl zwischen Eingangsbauteil und Ausgangsbauteil reduziert, so daß die eingebrachte Reibleistung abnimmt.

Unabhängig vom erforderlichen Traktionsbedarf wird weiterhin die Lamellentemperatur $T_{Lam}$ laufend gemessen bzw. näherungsweise errechnet und mit der laufend reduzierten zweiten Temperatur $T_{2,i}$ verglichen. Dies ist als **Verfahrensschritt 8** dargestellt. Liegt die Lamellentemperatur $T_{Lam}$ unterhalb der zweiten Temperatur $T_{2,i}$, wird die Lamellenkupplung weiterhin bedarfsabhängig derart geregelt, daß die eingebrachte Reibleistung herabgesetzt wird. Dies geschieht solange bis die erste Temperatur $T_1$ wieder unterschritten wird, Verfahrensschritt 2. Ergibt der Vergleich im Verfahrensschritt 8, daß die Lamellentemperatur $T_{Lam}$ die zweite Temperatur $T_{2,i}$ erreicht hat, so wird die Regelstrategie erneut geändert, **Verfahrensschritt 9.** Dann wird die Lamellenkupplung derart geregelt, daß die Lamellentemperatur $T_{Lam}$ sinkt. Dies geschieht durch Lüften der Lamellenkupplung, d. h. im mathematischen Sinne wird die Ableitung der Temperatur nach der Zeit (dT/dt) kleiner oder gleich Null gesetzt. Ein Zerstören der Lamellenkupplung durch Überhitzen wird somit vermieden. Solange die Lamellentemperatur $T_{Lam}$ im zeitfesten Temperaturbereich zwischen der ersten Temperatur $T_1$ und der zweiten Temperatur $T_{2,i}$ liegt, ohne $T_{2,i}$ jedoch zu erreichen, wird die Lamellenkupplung bedarfsabhängig geregelt, wobei die eingebrachte Reibleistung herabgesetzt und der Temperaturanstieg gebremst wird. Die Regelung erfolgt gemäß den Verfahrensschritten 2 bis 9, so lange, bis die erste Temperatur $T_1$ wieder unterschritten wird.

In einem darauffolgenden **Verfahrensschritt 10** wird eine Regelstrategie zum Rücksetzen der zweiten Temperatur $T_{2,i}$ aufgerufen. Danach kann die zweite Temperatur $T_{2,i}$ zeit- oder temperaturabhängig auf ihren Ausgangswert $T_{2,0}$ zurückgesetzt werden. Dies geschieht, wenn die entsprechenden Rücksetzbedingungen erfüllt sind, was in **Verfahrensschritt 11** überprüft wird. Ist dies der Fall - beispielsweise dann, wenn die Lamellentemperatur $T_{Lam}$ eine definierte dritte Temperatur $T_3$ unterschritten oder eine definierte Zeitdauer $\Delta t_2$ unterhalb der ersten Temperatur $T_1$ geblieben ist - so wird die zweite Temperatur $T_{2,i}$ in **Verfahrensschritt 12** wieder auf ihren Ausgangswert $T_{2,0}$ zurückgesetzt. Ist die Rücksetzbedingung noch nicht erfüllt, bleibt die reduzierte Temperatur $T_{2,i}$ maßgebend für ein Abschalten der Lamellenkupplung. In beiden Fällen wird an den Ausgangspunkt des Regelkreises zurückgekehrt, wobei die Lamellentemperatur $T_{Lam}$ weiterhin mit der ersten Temperatur $T_1$ verglichen wird, Verfahrensschritt 2.

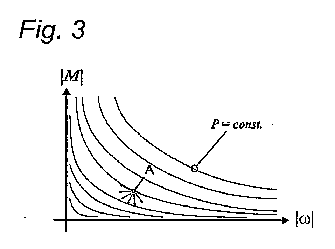

Figur 3 zeigt ein Leistungsdiagramm, in dem der Betrag der Winkelgeschwindigkeit $|\omega|$, die proportional zur Drehzahldifferenz der Reiblamellen ist, und der Betrag des Sperrmoments $|M|$ über den Achsen aufgetragen ist. Außerdem sind Leistungshyperbeln, d. h. Linien gleicher Leistung, ersichtlich, die mit P=const. beschriftet sind.

Der Punkt A zeigt beispielhaft einen Betriebspunkt der Lamellenkupplung, der die Lamellentemperatur über die zweite Temperatur $T_2$ hinausführen würde. Wenn ein Regeleingriff erforderlich ist, kann durch geeignete Wahl der Regelstrategie ein anderer Betriebspunkt unterhalb der Leistungshyperbel von A ausgewählt werden, um die Lamellenkupplung vor Überhitzung zu schützen. Dabei geben die Pfeile an, in welche Richtung der Betriebspunkt verschoben werden kann. Es ist ersichtlich, daß der Regeleingriff zur Begrenzung der Lamellentemperatur auf verschiedene Weise erfolgen kann. Zum einen kann das Sperrmoment in der Kupplung so erhöht werden, daß die Drehzahldifferenz zwischen Eingangsbauteil und Ausgangsbauteil sinkt. Zum anderen kann das Sperrmoment auch bei gleichzeitigem Zulassen einer Drehzahlerhöhung verringert werden. Um eine genaue Auswahl zu treffen, können in einer Regelstrategie dadurch auch fahrdynamische Kriterien berücksichtigt werden.

Figur 4 zeigt ein Wärmemodell in Form eines Verfahrens zum vereinfachten Bestimmen der Lamellentemperatur $T_{Lam}$ der Lamellenkupplung. Es ist ersichtlich, daß das Verfahren zweigeteilt ist und eine Startphase mit den Verfahrensschritten 1 bis 7 sowie eine sich daran anschließende Regelphase mit den Verfahrensschritten 8 bis 15 umfaßt. Die Startphase des Verfahrens dient dazu, schon bei Inbetriebnahme des Kraftfahrzeuges einen guten Näherungswert für die aktuelle Lamellentemperatur festzusetzen. Je nach Stillstandszeit des Kraftfahrzeuges, kann die Kupplungstemperatur und damit auch die Lamellentemperatur unterschiedlich hoch sein. War das Fahrzeug beispielsweise längere Zeit abgestellt, haben sowohl die Kupplungslamellen als auch das Öl der Lamellenkupplung Umgebungstemperatur angenommen.

War das Kraftfahrzeug dagegen nur kurze Zeit abgestellt, oder wurde der Motor in schwerem Gelände abgewürgt, so kann die Lamellentemperatur noch so erheblich sein, daß dies berücksichtigt werden müßte.

Hierfür wird nach Start des Kraftfahrzeuges die beim letzten Betrieb des Kraftfahrzeugs zuletzt berechnete Lamellentemperatur $T_{Lam,Stop}$, sowie eine zuletzt gemessene Referenztemperatur $T_{Ref,Stop}$ und die zugehörige Uhrzeit

$t_{Stop}$ aus einem Datenspeicher abgerufen sowie die aktuell vorliegende Referenztemperatur $T_{Ref,0}$, die aktuelle Zeit $t_0$ und die aktuelle Reibleistung $P_0$ gemessen. Dies ist in Figur 1 als **Verfahrensschritt 1** dargestellt. Als Referenztemperatur können verschiedene Temperaturen dienen, wie beispielsweise die Öltemperatur des im Gehäuse zu Kühl- und Schmierzwecken befindlichen Öls, die Gehäusetemperatur oder auch die atmosphärische Umgebungstemperatur, welche den Wärmeübergang der Lamellenkupplung zur Atmosphäre beeinflußt.

In **Verfahrensschritt 2** werden die aktuelle Zeit $t_0$ mit der Uhrzeit $t_{Stop}$ beim Stillsetzen des Kraftfahrzeugs verglichen. Ist dieser Wert $t_0 - t_{Stop}$ größer als ein vorbestimmtes Zeitintervall $\Delta t_{max}$, so wird angenommen, daß die Lamellentemperatur ausreichend stark abgesunken ist und daß die für die Berechnung der Folgetemperatur erforderliche erste Lamellentemperatur $T_{Lam,0}$ gleich der aktuellen Referenztemperatur $T_{Ref,0}$ gesetzt werden kann. Dies ist als **Verfahrensschritt 6** dargestellt.

Ist das Zeitintervall, in dem das Kraftfahrzeug bzw. die Lamellenkupplung außer Betrieb war, kürzer als das vorgegebene Zeitintervall $\Delta t_{max}$, so wird in **Verfahrensschritt 3** das Verhältnis von beim letzten Stillsetzen zuletzt berechneter Lamellentemperatur $T_{Lam,Stop}$ zu zuletzt gemessener Öltemperatur $T_{Ref,Stop}$ ermittelt und mit einem vorgegebenen Wert x verglichen. Dieses Verhältnis kann minimal den Wert 1 annehmen, nämlich dann, wenn die zuletzt berechnete Lamellentemperatur gleich der zuletzt gemessenen Referenztemperatur ist. War die vor dem Stillsetzen zuletzt berechnete Lamellentemperatur viel größer als die vor dem Stillsetzen zuletzt gemessene Referenztemperatur, so ist dies beim Neustart zu berücksichtigen. Was dieser Wert jedoch kleiner oder gleich dem vorbestimmten Wert x, d.h. die letzte berechnete Lamellentemperatur und die gemessene Öltemperatur lagen nahe beieinander, dann wird die erste Lamellentemperatur $T_{Lam,0}$ gleich der gemessenen ersten Referenztemperatur $T_{Ref,0}$ gesetzt. Dies ist als **Verfahrensschritt 6** dargestellt.

Ist jedoch das Verhältnis von zuletzt gespeicherter errechneter Lamellentemperatur $T_{Lam,Stop}$ zu zuletzt ermittelten Referenztemperatur $T_{Ref,Stop}$ größer als dieser vorbestimmte Wert x, so wird die aktuelle Lamellentemperatur mittels einer Gleichung näherungsweise berechnet, wie als **Verfahrensschritt 4** dargestellt. Diese lautet:

$$T_{Lam,0} := a_0 \cdot \frac{a_1^n - 1}{a_1 - 1} + a_1^n \cdot \left(T_{Lam,Stop} - T_{Ref,Stop}\right) + T_{Lam,0}$$

Darin sind

| | |
|---|---|
| $T_{Lam,Stop}$ | die Lamellentemperatur vor n Zeitintervallen, |
| $T_{Ref,Stop}$ | die Referenztemperatur vor n Zeitintervallen, |
| $T_{Ref,0}$ | die aktuelle Referenztemperatur, |
| $n$ | die Anzahl der Zeitintervalle zwischen letztem Ausschalten des Kraftfahrzeugs und aktuellem Zeitpunkt und |
| $a_0$ und $a_1$ | empirische Konstanten, welche kupplungsspezifisch sind und anhand von Versuchsreihen an der jeweiligen Lamellenkupplung empirisch ermittelt werden müssen. |

Der Wert n gibt die Anzahl der Zeitintervalle an, die zwischen dem Zeitpunkt des letzten Ausschaltens des Kraftfahrzeug und dem aktuellen Zeitpunkt des erneuten Starts liegen, der mit dem Index 0 definiert wird.

In **Verfahrensschritt 5** wird das Verhältnis von näherungsweise berechneter Lamellentemperatur $T_{Lam,0}$ zu aktueller Referenztemperatur $T_{Ref,0}$ mit dem vordefinierten Wert x verglichen, analog zu Verfahrensschritt 3. Ist dieses Verhältnis kleiner oder gleich dem vorbestimmten Wert x, d.h. die Lamellentemperatur ist ausreichend niedrig, dann wird die erste Lamellentemperatur $T_{Lam,0}$ gleich der gemessenen ersten Referenztemperatur $T_{Ref,0}$ gesetzt, wie in **Verfahrensschritt 6** gezeigt.

Ist das besagte Verhältnis $T_{Lam,0}$ zu $T_{Ref,0}$ jedoch größer als der vorbestimmte Wert x, d.h. die Lamellentemperatur ist hoch, so wird die erste näherungsweise berechnete Lamellentemperatur $T_{Lam,0}$ verwendet, **Verfahrensschritt 7.**

Die eigentliche Regelphase gemäß den Verfahrensschritten 9 bis 15 beginnt erst nachdem die erste Lamellentemperatur $T_{Lam,0}$ zum Startzeitpunkt des Kraftfahrzeugs bestimmt wurde. In der Regelphase wird die Lamellentemperatur näherungsweise errechnet, um ein Überhitzen der Kupplungslamellen durch entsprechenden Regeleingriff rechtzeitig zu verhindern. Ausgehend von der in der Startphase ermittelten ersten Lamellentemperatur $T_{Lam,0}$ werden, wie oben beschrieben, in festen Zeitintervallen die Referenztemperatur $T_{Ref,i}$ eines mit den Kupplungslamellen zumindest mittelbar im Wärmeaustausch stehenden Mediums oder Bauteils gemessen, sowie die der Lamellenkupplung zugeführte Reibleistung $P_i$ ermittelt. Dabei wird der Startzeitpunkt gemäß **Verfahrensschritt 8** mit Index i=0 definiert und die jeweils folgenden **Verfahrensschritte 9** mit jeweiligem Index i + 1.

Die Lamellentemperatur $T_{Lam,i}$ wird in denselben Zeitintervallen berechnet, in denen die Referenztemperatur bzw. die Reibleistung ermittelt wird, **Verfahrensschritte 10 und 11**. Dabei berechnet sich die Lamellentemperatur $T_{Lam,i}$

aus der jeweils zu einem ein Zeitintervall früheren Zeitpunkt gemessenen Referenztemperatur, der zum früheren Zeitpunkt ermittelten Reibleistung, der zum früheren Zeitpunkt berechneten bzw. festgesetzten Lamellentemperatur, der im aktuellen Zeitpunkt gemessenen Referenztemperatur und der im aktuellen Zeitpunkt ermittelten Reibleistung gemäß der oben genannten Formel (4), die als **Verfahrensschritt 12** dargestellt ist. Insofern wird auf die obige Beschreibung Bezug genommen.

In einem weiteren **Verfahrensschritt 13** wird die jeweils berechnete Lamellentemperatur $T_{Lam,i}$ mit der ersten Temperatur $T_1$ verglichen. Ergibt dieser Vergleich, daß die Lamellentemperatur einen kritischen Wert erreicht, so wird die Lamellenkupplung gemäß **Verfahrensschritt 14** wie oben beschrieben derart betätigt, daß die zugeführte Reibleistung $P_i$ abnimmt. Ist die ermittelte Lamellentemperatur $T_{Lam,i}$ unkritisch, wird die Kupplungsfunktion freigegeben und die Lamellenkupplung kann bedarfsabhängig betrieben werden, wie als **Verfahrensschritt 15** dargestellt.

**Patentansprüche**

1.  Verfahren zum temperaturabhängigen Regeln einer Lamellenkupplung im Antriebsstrang eines Kraftfahrzeugs mit einem Eingangsbauteil, einem Ausgangsbauteil und Kupplungslamellen zur Drehmomentübertragung, wobei in der Lamellenkupplung bei einer Drehzahldifferenz zwischen Eingangsbauteil und Ausgangsbauteil eine Reibleistung $P_i$ entsteht, die ein Erwärmen der Kupplungslamellen zur Folge hat, mit folgenden Verfahrensschritten:

    Bestimmen einer kupplungsbezogenen Temperatur,
    bei Betrieb der Kupplungslamellen in einem Temperaturbereich unterhalb einer definierten, dauernd zulässigen ersten Temperatur $T_1$ wird die Lamellenkupplung abhängig vom Traktionsbedarf ungeachtet der entstehenden Reibleistung geregelt,
    bei Betrieb der Kupplungslamellen in einem Temperaturbereich zwischen der ersten Temperatur $T_1$ und einer gesetzten höheren zweiten Temperatur $T_2$ wird die Lamellenkupplung bedarfsabhängig derart geregelt, daß die eingebrachte Reibleistung herabgesetzt wird,
    bei Betrieb der Kupplungslamellen oberhalb der ersten Temperatur $T_1$ wird die gesetzte zweite Temperatur $T_2$ niedriger gesetzt,
    bei Erreichen der zweiten Temperatur $T_2$ wird die Lamellenkupplung derart geregelt, daß die kupplungsbezogene Temperatur sinkt.

2.  Verfahren nach Anspruch 1,
    **dadurch gekennzeichnet,**
    **daß** die zweite Temperatur $T_2$ in Abhängigkeit von der Betriebsdauer der kupplungsbezogenen Temperatur oberhalb der ersten Temperatur $T_1$ stufenweise herabgesetzt wird.

3.  Verfahren nach Anspruch 1 oder 2,
    **dadurch gekennzeichnet,**
    **daß** die zweite Temperatur $T_2$ in Abhängigkeit von der Steigung der kupplungsbezogenen Temperatur bei Betrieb oberhalb der ersten Temperatur $T_1$ herabgesetzt wird.

4.  Verfahren nach einem der Ansprüche 1 bis 3,
    **dadurch gekennzeichnet,**
    **daß** die zweite Temperatur $T_2$, nachdem die kupplungsbezogene Temperatur die erste Temperatur $T_1$ überschritten hat, zeitverzögert herabgesetzt wird.

5.  Verfahren nach einem der Ansprüche 1 bis 4,
    **dadurch gekennzeichnet,**
    **daß** die Reibleistung $P_i$ aus der Drehzahldifferenz zwischen dem Eingangsbauteil und dem Ausgangsbauteil sowie einem in der Lamellenkupplung erzeugten Sperrmoment berechnet wird, wobei zum Herabsetzen der Reibleistung das Sperrmoment oder die Drehzahldifferenz reduziert werden.

6.  Verfahren nach einem der Ansprüche 1 bis 5,
    **dadurch gekennzeichnet,**
    **daß** die Lamellenkupplung mittels einer elektronischen Regeleinheit zur Regelung der Fahrdynamik des Kraftfahrzeugs gesteuert wird, wobei die Reibleistung $P_i$ in Abhängigkeit vom Fahrzustand des Kraftfahrzeugs nach Traktionsbedarf geregelt wird.

**7.** Verfahren nach Anspruch 6,
**dadurch gekennzeichnet,**
**daß** in kritischen Fahrzuständen die Regelung der Fahrdynamik des Kraftfahrzeugs gegenüber einer Verminderung der Reibleistung der Lamellenkupplung Vorrang hat.

**8.** Verfahren nach einem der Ansprüche 1 bis 7,
**dadurch gekennzeichnet,**
**daß** die zweite Temperatur $T_2$ nach Ablauf einer bestimmten Zeit $\Delta t_2$, nachdem die kupplungsbezogene Temperatur die erste Temperatur $T_1$ unterschritten hat, wieder auf ihren Ausgangswert zurückgesetzt wird.

**9.** Verfahren nach einem der Ansprüche 1 bis 7,
**dadurch gekennzeichnet,**
**daß** die zweite Temperatur $T_2$ wieder auf ihren Ausgangswert zurückgesetzt wird, nachdem die kupplungsbezogene Temperatur eine definierte dritte Temperatur $T_3$ unterschritten hat.

**10.** Verfahren nach Anspruch 9,
**dadurch gekennzeichnet,**
**daß** die dritte Temperatur $T_3$ kleiner ist als die erste Temperatur $T_1$.

**11.** Verfahren nach einem der Ansprüche 8 bis 10,
**dadurch gekennzeichnet,**
**daß** die kupplungsbezogene Temperatur nach erneutem Zurücksetzen der zweiten Temperatur $T_2$ auf ihren Ausgangswert wieder abhängig vom Traktionsbedarf ungeachtet der entstehenden Reibleistung geregelt wird.

**12.** Verfahren nach einem der Ansprüche 1 bis 11,
**dadurch gekennzeichnet,**
**daß** als kupplungsbezogene Temperatur eine Lamellentemperatur $T_{Lam}$ bestimmt wird.

**13.** Verfahren nach Anspruch 12,
**dadurch gekennzeichnet,**
**daß** die Lamellentemperatur $T_{Lam}$ mit Hilfe eines vereinfachten Wärmemodells näherungsweise bestimmt wird.

**14.** Verfahren nach Anspruch 12 oder 13,
**dadurch gekennzeichnet,**
**daß** zur näherungsweisen Bestimmung der kupplungsbezogenen Temperatur eine Referenztemperatur $T_{Ref,i}$ eines mit den Kupplungslamellen zumindest mittelbar im Wärmeaustausch stehenden Mediums oder Bauteils und die der Lamellenkupplung zugeführte Reibleistung $P_i$ verwendet werden.

**Claims**

**1.** A process of controlling a multi-plate coupling in the driveline of a motor vehicle as a function of temperature, said multi-plate coupling having an input component, an output component and coupling plates for torque transmitting purposes, wherein, in the case of a speed differential between the input component and the output component, there occurs in the multi-plate coupling a friction power $P_i$ which results in the coupling plates being heated, comprising the following process stages:

determining a coupling-related temperature;
if the coupling plates are operated within a temperature range below a defined, permanently permitted first temperature $T_1$, the multi-plate coupling is controlled as a function of the traction requirements irrespective of the resulting friction power;
if the coupling plates are operated within a temperature range between the first temperature $T_1$ and a set higher temperature $T_2$, the multi-plate coupling is controlled as a function of requirements in such a way that the introduced friction power is reduced;
if the multi-plate coupling is operated above the first temperature $T_1$, the set second temperature $T_2$ is set to a lower level;
when the second temperature $T_2$ is reached, the multi-plate coupling is controlled in such a way that the coupling-related temperature drops.

**2.** A process according to claim 1,
**characterised in**
**that**, as a function of the operating duration of the coupling-related temperature above the first temperature $T_1$, the second temperature $T_2$ is reduced in stages.

**3.** A process according to claim 1 or 2,
**characterised in**
**that** the second temperature $T_2$ is reduced as a function of the increase in the coupling-related temperature during operation above the first temperature $T_1$.

**4.** A process according to any one of claims 1 to 3,
**characterised in**
**that**, after the coupling-related temperature has exceeded the first temperature $T_1$, the second temperature $T_2$ is reduced on a time delay basis.

**5.** A process according to any one of claims 1 to 4,
**characterised in**
**that** the friction power $P_i$ is calculated from the speed differential between the input component and the output component and from a locking moment generated in the multi-plate coupling, wherein for reducing the friction power, the locking moment or the speed differential is decreased.

**6.** A process according to any one of claims 1 to 5,
**characterised in**
**that** the multi-plate coupling is controlled by an electronic control unit for controlling the driving dynamics of the motor vehicle, wherein the friction power $P_i$ is controlled as a function of the driving conditions of the motor vehicle according to traction requirements.

**7.** A process according to claim 6,
**characterised in**
**that** under critical driving conditions, controlling the driving dynamics of the motor vehicle takes precedence over reducing the friction power of the multi-plate coupling.

**8.** A process according to any one of claims 1 to 7,
**characterised in**
**that**, after the passage of a certain time $\Delta t_2$ after the coupling-related temperature has fallen below the temperature $T_1$, the second temperature $T_2$ is returned to its starting value.

**9.** A process according to any one of claims 1 to 7,
**characterised in**
**that** the second temperature $T_2$ is returned to its starting value after the coupling-related temperature has fallen below a defined third temperature $T_3$.

**10.** A process according to claim 9,
**characterised in**
**that** the third temperature $T_3$ is lower than the first temperature $T_1$.

**11.** A process according to any one of claims 8 to 10,
**characterised in**
**that**, after the second temperature $T_2$ has again been returned to its starting value, the coupling-related temperature is again controlled as a function of the traction requirements irrespective of the resulting friction power.

**12.** A process according to any one of claims 1 to 11,
**characterised in**
**that** a plate temperature $T_{Lam}$ is determined as the coupling-related temperature.

**13.** A process according to claim 12,
**characterised in**
**that** the plate temperature $T_{Lam}$ is determined approximately with the help of a simplified heat model.

**14.** A process according to claim 12 or 13,
**characterised in**
**that**, for approximately determining the coupling-related temperature, there is used a reference temperature $T_{Ref,i}$ of a medium or component between which and the coupling plates there exists an at least indirect heat exchange, as well as the friction power $P_i$ supplied to the multi-plate coupling.

**Revendications**

**1.** Procédé pour réguler un embrayage à disques en fonction de la température dans une chaîne cinématique d'un véhicule comportant un module d'entrée, un module de sortie et un embrayage à disques pour la transmission du couple, dans lequel une friction $P_i$, qui a pour conséquence un échauffement de l'embrayage à disques, se produit dans l'embrayage à disques lors d'une différence de vitesse de rotation de rotation entre le module d'entrée et le module de sortie, comportant les étapes de procédé suivantes :

la détermination d'une température concernant l'embrayage,
lors du fonctionnement de l'embrayage à disques dans une plage de températures située en dessous d'une première température $T_1$ définie durablement fiable, l'embrayage à disques est réglé en fonction des besoins de traction indépendamment de la friction se produisant,
lors du fonctionnement de l'embrayage à disques dans une plage de températures entre la première température $T_1$ et une seconde température $T_2$ déterminée plus élevée, l'embrayage à disques est régulé en fonction des besoins de sorte que la friction introduite est réduite,
lors du fonctionnement de l'embrayage à disques au-dessus de la première température $T_1$, la seconde température fixée $T_2$ est fixée plus basse,
lorsqu'il atteint la seconde température $T_2$, l'embrayage à disques est régulé de sorte que la température liée à l'embrayage chute.

**2.** Procédé selon la revendication 1, **caractérisé en ce que** la seconde température $T_2$ est diminuée progressivement au-dessus de la première température $T_1$ selon la durée de fonctionnement de la température concernant l'embrayage.

**3.** Procédé selon la revendication 1 ou 2, **caractérisé en ce que** la seconde température $T_2$ est diminuée lors du fonctionnement au-dessus de la première température $T_1$ selon l'augmentation de la température concernant l'embrayage.

**4.** Procédé selon l'une des revendications 1 à 3, **caractérisé en ce que** la seconde température $T_2$, après que la température concernant l'embrayage a dépassé la première température $T_1$, est réduite temporairement.

**5.** Procédé selon l'une des revendications 1 à 4, **caractérisé en ce que** la friction $P_i$ est calculée à partir de la différence de vitesse de rotation entre le module d'entrée et le module de sortie et d'un couple de blocage généré dans l'embrayage à disques, où le couple de blocage ou la différence de vitesse de rotation sont réduits pour diminuer la friction.

**6.** Procédé selon l'une des revendications 1 à 5, **caractérisé en ce que** l'embrayage à disques est commandé au moyen d'une unité de réglage électronique pour régler la stabilité du véhicule, dans lequel la friction $P_i$ est régulée en fonction des besoins de traction selon l'état de conduite du véhicule.

**7.** Procédé selon la revendication 6, **caractérisé en ce que**, dans des états de conduite critiques, le réglage de la stabilité du véhicule a priorité sur une réduction de la friction de l'embrayage à disques.

**8.** Procédé selon l'une des revendications 1 à 7, **caractérisé en ce que** la seconde température $T_2$ revient à sa valeur de sortie après écoulement d'un temps déterminé $\Delta t_2$, après que la température concernant l'embrayage soit passée en dessous de la première température $T_1$.

**9.** Procédé selon l'une des revendications 1 à 7, **caractérisé en ce que** la seconde température $T_2$ revient à sa valeur de sortie, après que la température concernant l'embrayage est passée en dessous d'une troisième température $T_3$ définie.

**10.** Procédé selon la revendication 9, **caractérisé en ce que** la troisième température $T_3$ est inférieure à la première température $T_1$.

**11.** Procédé selon l'une des revendications 8 à 10, **caractérisé en ce que** la température concernant l'embrayage est de nouveau réglée après nouveau retour de la seconde température $T_2$ à sa valeur de sortie en fonction des besoins de traction indépendamment de la friction se produisant.

**12.** Procédé selon l'une des revendications 1 à 11, **caractérisé en ce qu'**une température de disques $T_{Lam}$ est déterminée en tant que température concernant l'embrayage.

**13.** Procédé selon la revendication 12, **caractérisé en ce que** la température de disques $T_{Lam}$ est déterminée approximativement à l'aide d'un modèle thermique simplifié.

**14.** Procédé selon la revendication 12 ou 13, **caractérisé en ce que**, pour déterminer approximativement la température concernant l'embrayage, une température de référence $T_{Ref,i}$ d'un moyen ou d'un composant se trouvant au moins immédiatement en échange thermique avec l'embrayage à disques et la friction $P_i$ délivrée à l'embrayage à disques sont utilisées.

Fig. 1

## Fig. 2

START

1

$T_{2,i} := T_{2,0}$
$i := 0$

2

$T_{Lam} \geq T_1$  NEIN

JA

3

Strategie zur Reduktion
von $T_{2,i}$ aufrufen

4

Strategie zur Beurteilung des
Fahrzustandes aufrufen und
Traktionsbedarf bestimmen

5

Hoher
Traktionsbedarf?

JA  NEIN

7

Regelungsstrategie zur
Reduktion der Reibleistung
durch Reduktion der
Drehzahldifferenz aufrufen,
um Anstieg von $T_{Lam}$ zu
bremsen

10

Strategie zur Beurteilung der
Rücksetzbedingung aufrufen

11

Rücksetzbedingung
für $T_{2,i}$ erfüllt?  NEIN

JA

12

$T_{2,i} := T_{2,0}$

6

Regelungsstrategie zur
Reduktion der Reibleistung
durch Reduktion des
Sperrmomentes aufrufen,
um Anstieg von $T_{Lam}$ zu
bremsen

8

NEIN  $T_{Lam} \geq T_{2,i}$

JA

9

Regelungsstrategie
zur Senkung der
Lamellentemperatur
$T_{Lam}$ aufrufen

*Fig. 3*

*Fig. 4*

```
                              ( START )
```

**1** — Größen, die beim Stillsetzen gespeichert werden:

$t_{Stop}$ — Uhrzeit
$T_{Lam,Stop}$ — Lamellentemperatur
$T_{Ref,Stop}$ — Referenztemperatur

Größen, die beim Start gemessen werden:

$t_0$ — Zeit beim Start
$T_{Ref,0}$ — Referenztemperatur beim Start
$P_{Reib,0}$ — Reibleistung

**2** — $t_0 - t_{Stop} > \Delta t_{max}$ — JA

**3** — $\dfrac{T_{Lam,Stop}}{T_{Ref,Stop}} \leq x$ — JA

**4** — Berechnung von $n$ aus $t_0 - t_{Stop}$:

$$T_{Lam,0} := a_0 \cdot \frac{a_1^n - 1}{a_1 - 1} + a_1^n \cdot \left(T_{Lam,Stop} - T_{Ref,Stop}\right) + T_{Ref,0}$$

**5** — $\dfrac{T_{Lam,0}}{T_{Ref,0}} \leq x$ — JA

**6** — $T_{Lam} := T_{Ref}$

*Annahme: Reibmittel vollständig abgekühlt*

**7** — $T_{Lam} := T_{Lam,0}$

**8** — $i := 0$

**9** — $i := i + 1$

**10** — Messung $T_{Ref}, P_{Reib}$

**11** — $T_{Ref,i} := T_{Ref}$
$P_i := P_{Reib}$

**12** — $$T_{Lam,i} = a_0 + a_1 \cdot \left(T_{Lam,i-1} - T_{Ref,i-1}\right) + a_2 \cdot |P_{i-1}| + a_3 \cdot |P_i| + T_{Ref,i}$$

**13** — $T_{Lam,i} > T_A$ — JA

**14** — Regelungsstrategie zur Begrenzung der Reibleistung $P_{i+1}$ aufrufen und dabei aktuellen Wert von $T_{Lam,i}$ übergeben

**15** — Kupplungsfunktion uneingeschränkt freigeben

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030079954 A1
- DE 19815259